(19)

Europäisches
Patentamt
European
Patent Office
Office européen
des brevets

(11) **EP 4 653 180 A1**

(12) **EUROPEAN PATENT APPLICATION**

(43) Date of publication:
**26.11.2025 Bulletin 2025/48**

(21) Application number: **24182580.1**

(22) Date of filing: **17.06.2024**

(51) International Patent Classification (IPC):
***B29C 65/08*** (2006.01)

(52) Cooperative Patent Classification (CPC):
**B29C 65/08; B29C 66/73921; B29C 66/8242;
B29C 66/8322; B29C 66/847; B29C 66/9221;**
B29C 66/9261; B29C 66/929; B29C 66/934;
B29C 66/939; B29C 66/9513; B29C 66/9517;
B29C 66/9672; B29C 66/9674

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.05.2024 PT 2024119478**

(71) Applicant: **Proximity Formula Unipessoal Lda
4485-518 Vila do Conde (PT)**

(72) Inventor: **DINIS DE PAIVA, Antonio Pedro
4485-518 Vila do Conde (PT)**

(74) Representative: **Patentree
Edificio Net
Rua de Salazares, 842
4149-002 Porto (PT)**

(54) **ULTRASONIC WELDING DEVICE**

(57)     The present disclosure refers to an ultrasonic welding device, comprising: an ultrasonic welding acoustic assembly (1) for joining workpieces by fusion; a pneumatic cylinder for linearly moving the acoustic assembly (1) between a lowered welding position and a raised resting position; a load cell (2) for detecting force applied to the workpieces by the acoustic assembly (1).

Fig. 3

## Description

## TECHNICAL FIELD

The present description refers to welding devices, specifically to an ultrasonic welding device used to join plastic materials by means of ultrasonic vibrations. Preferably, to join thermoplastic materials.

## BACKGROUND

Traditional welding methods, such as hot air gun welding and electric resistance welding, bear certain drawbacks like, for example, thermal degradation of materials, allocation of a large area and the need to control heat with high precision. Ultrasonic welding offers an efficient alternative, using high frequency vibrations for generating well located heat and melting the materials being joined.

Ultrasonic welding stations present various types of actuators in the support of the acoustic assembly, manual, pneumatic or cylinder with servomotor.

Only systems of the cylinder with servomotor enable total control of welding parameters, but systems using pneumatic actuators do not allow total control. Normally, controlling the force for triggering the ultrasound is done by spring, and there is no control of the displacement of the acoustic assembly. Accordingly, when a pneumatic workstation is used, it is not possible to achieve repeatability or control of the welding quality and the use of a cylinder with servomotor makes the workstations more expensive.

It is noted that the existing devices may be limited in terms of energy control and repeatability of welding.

These facts are described in order to illustrate the technical problem solved by the embodiments of the present document.

## GENERAL DESCRIPTION

The present disclosure refers to an ultrasonic welding device.

The present disclosure appears as a possibility of total definition of the parameters of the welding energy applied to the workpiece and the control thereof by measuring in real time or online, using a pneumatic actuation system. The device makes it possible to define the pressure applied to the workpiece, the lowering speed of the acoustic assembly, the force for triggering ultrasound by measuring the force acting on the workpiece with a load cell and measuring the position of the acoustic assembly for controlling the welding.

One of the advantages of the present disclosure is the possibility of reducing the stroke of the cylinder during the productive cycle through a pilot no-return valve, shortening the cycle time and increasing the productivity of the machine.

In an embodiment, the work table enables leveling and the possibility of being fastened at various preset positions ("gabarit").

An ultrasonic welding station comprises a device, generally L-shaped, which supports the acoustic assembly and enables it to be moved linearly towards the workpiece to be welded, applying a pressure by actuating the cylinder and applying a mechanical vibration in a frequency above 15 kHz, generating localized heating and thus enabling fusion of the workpiece. The acoustic assembly converts the electrical voltage into mechanical vibration through a converter that uses piezoelectric materials. These piezoelectric materials have properties that deform when excited with an electrical voltage, so the converters are designed such that the deformations of the pads or piezoelectric ceramic disks have a favorable displacement with the application of the welding process. By applying a sinusoidal electrical voltage with a frequency higher than 15 kHz to the ceramic pads, they initiate a vibration which is transmitted to the face of the converter. The converters transform electrical voltage into mechanical vibration which can be amplified by connecting a booster in series. At the end of the acoustic assembly it has a horn or sonotrode which presents a shape or geometry depending on the application.

In an embodiment, the 3 components, namely the converter, the booster and the horn, constituents of the acoustic assembly, should be defined such that its natural vibration frequency is equal to the frequency of the excitation electrical voltage, so that it can amplify the mechanical vibration and the mode of vibration is in accordance with that intended for the application. This embodiment is carried out resorting to the intrinsic mechanical properties of the bodies, such as the natural mode of vibration and the natural vibration frequency, using computer methods (such as the finite elements technique) to calculate these physical properties. The natural mode of vibration should be designed according to the process and objective.

The main parameter influencing the welding is the vibration amplitude, which after being previously defined by the acoustic assembly project can be regulated in the electrical voltage generatorthat powers the converter, and the amplitude of the electric signal may vary and, consequently, so may the amplitude of the mechanical vibration at the end of the horn.

In an embodiment, the amplitude is equal to the peak-to-peak displacement on the horn face.

So as to enable the operator to apply the ultrasonic welding process and with total control of all the parameters which might influence the fusion, a pneumatic workstation is presented.

The disclosure refers to a device, for example, a pneumatic welding station to be used in thermoplastic materials.

The duration of the welding process can be controlled by time or by the energy applied to the workpiece. When the welding is defined by the energy applied, the process only ends when the pre-defined energy is attained, enabling repeatability and stability of the process.

At the end of the process the duration of the cycle is checked, and if found to be outside the previously defined range, the operator is alerted.

When the welding is defined by time, it finishes at the end of the previously defined time and checks the energy applied. The operator is advised if this energy is outside the previously defined range. The ultrasonic generator enables the electrical voltage output to be regulated from 100 V to 1000V, which corresponds to a maximum amplitude in the converter of 20 $\mu$m.

Ultrasonic welding is governed by the formula E = Pt (J), wherein E = energy, P = power and t = time (s). The power is governed by the formula P = Fv (W), where the force (F) depends on the pressure (p) of the cylinder. While the speed (v) depends on the frequency (f) and vibration amplitude (a) of the acoustic assembly. Accordingly, the energy is governed by the formula:

$$E = p \times A \times f \times a \times t$$

Bearing in mind the energy formula, the development of the welding station took into account the possibility of controlling all the parameters that might influence the energy applied to the workpiece and its repeatability.

So, the pressure of the cylinder is defined by a pressure-regulating pneumatic proportional valve, the area of the cylinder (*A*) is constant, the frequency of the acoustic assembly (*f*) is initially measured, the vibration amplitude (*a*) of the horn and the duration of the process (t) can be defined by the operator. This being the case, through of scheduling of the existing PLC at the workstation, the operator introduces the pressure of the cylinder, the welding time or the intended energy, and the amplitude of the horn face. Though not contained in the energy formula, the lowering speed of the actuator interferes directly with the process being static or dynamic due to the response time. Accordingly, it is possible to regulate this speed in a precise manner through a one-way precision flow regulator valve.

In order to regulate the force applied to the workpiece, a pneumatic proportional valve was introduced, which converts an electric signal into a certain and precise pressure value.

Since the force applied to the workpiece is a very important parameter in the process, the welding station has a load cell capable of directly measuring the force applied to the workpiece and thus guarantee the total control of the energy applied to the workpiece.

In an embodiment, the load cell is capable of measuring forces between $\pm$200 N and $\pm$5000 N.

In an embodiment, the trigger to begin welding is defined by the force applied to the workpiece, that is, by the reading performed on the load cell and previously defined by the operator.

As a form of welding quality control, an online reading of the cylinder position was applied, making it possible to detect defective workpieces, that is, if the displacement of the cylinder after the fusion is greater than that previously expected, the operator is informed of the possible flaw. During calibration of the welding process, the expected displacement after fusion of the workpiece is measured, whereupon the operator can define this value in the program of the device. To the extent that whenever this value is exceeded for any reason, such occurrence may be informed. Preferably the displacement is measured through the downward movement of the cylinder after welding, with a position transmitter sensor.

In an embodiment, the expected displacement is validated with pre-determined weldings and if the welding is defective, this downward movement will be greater.

Once material fusion has finished, it is advisable to maintain a pressure on the workpiece when it cools so as to improve the bond, and with this equipment it is possible to control either the time or the pressure in this stage of the welding cycle.

In order to be able to accelerate serial production, it is possible to define a return height of the cylinder different to position 0, enabling time gain in the serial production. That is, the possibility of regulating the stroke of the cylinder through a pneumatic system with electrovalve and pilot no-return valve.

The present disclosure refers to an ultrasonic welding device, comprising

an ultrasonic welding acoustic assembly for joining workpieces by fusion;
a pneumatic cylinder for linearly moving the acoustic assembly between a lowered welding position and a raised resting position;
a load cell for detecting force applied to the workpieces by the acoustic assembly.

In an embodiment, the device comprises a pilot no-return valve to control the pneumatic cylinder for limiting the upward linear movement of the pneumatic cylinder up to an intermediate position between the lowered welding position and a raised resting position.

In an embodiment, the pilot no-return valve is piloted, enabling the user to activate said valve. Being a pilot value, the user can indicate when it wishes to stop the retreat of the cylinder and, automatically, the valve is driven when the position transmitter sensor detects this position.

For example, if the total stroke is 0-100 mm, through this valve, the user can regulate the stroke to the desired range (for example 20-100m) and the cycle will always run automatically within that range.

In an embodiment, the device comprises a position sensor for detecting the position of the acoustic assembly relative to the workpieces.

In an embodiment, the device comprises a controller configured for receiving a signal from the position sensor to measure downward linear movement of the acoustic assembly after welding the workpieces to warn of a defective welding if the downward linear movement is greater than a pre-set threshold.

In an embodiment, the device comprises a movable plate relative to a base of the device, to support the workpieces for welding, and wherein the acoustic assembly is configured to move linearly relative to the base of the device.

In an embodiment, the plate is vertically movable relative to the base of the device between a lowered position and a raised position.

In an embodiment, the device comprises a lifting actuator for moving the plate.

In an embodiment, the acoustic assembly comprises a converter, a booster and a horn.

In an embodiment, the acoustic assembly has a vibration amplitude of 12 - 120$\mu$m.

In an embodiment, the load cell is configured to detect a force of 0 N to 5000 N, preferably 200 N to 2000 N, more preferably 500 N to 1000 N.

In an embodiment, the device comprises a plurality of load cells.

In an embodiment, the device comprises a precision one-way flow control valve arranged on an air outlet of the pneumatic cylinder, for regulating the speed of movement of the acoustic assembly. Preferably, it is arranged on the cylinder exhaust.

In an embodiment, the precision one-way flow control valve is arranged on the exhaust of the pneumatic cylinder for regulating the speed of movement of the acoustic assembly in the forward situation, that is, when the acoustic assembly is in operation, preferably when the acoustic assembly is moving downwards towards the workpiece being welded.

In an embodiment, the precision valve is a one-way valve.

In an embodiment, the pneumatic cylinder exerts a pressure of 0.005 to 0.9 MPa, preferably 0.05 MPa to 0.6 MPa.

In an embodiment, the acoustic assembly has a frequency of 15 to 50 kHz, preferably 20 kHz to 30 kHz.

In an embodiment, the converter has a maximum amplitude of 20 $\mu$m, preferably 2 to 20 $\mu$m.

In an embodiment, the converter comprises a plurality of piezoelectric ceramics, preferably piezoelectric ceramic disks.

Some of the advantages of the present disclosure refer to:

Precise control of the forward speed (40 resolution ranges) with precision one-way flow control valve;
Regulation of the maximum forward speed with precision one-way flow control valve;
Load cell for measuring the force on the workpiece;

Electronic regulation of the welding pressure with a pneumatic proportional valve;
Double pressure for use in the waiting stage after welding;
Quality control by measuring the welding time/energy and online measuring of the distance of the pneumatic cylinder;
Option of welding by time or energy;
Leveling base for fastening the "gabarit";
Regulating the cylinder stroke to decrease the time per cycle and increase productivity.

**BRIEF DESCRIPTION OF THE DRAWINGS**

For an easier understanding, figures are herein attached, which represent preferred embodiments that are not intended to limit the object of the present description.

**Figure 1:** Schematic representation of an embodiment of the acoustic assembly, namely the converter **(a),** booster **(b)** and horn **(c).**

**Figure 2:** Schematic representation of an embodiment of the welding parameters.

**Figure 3:** Schematic representation of an embodiment of the ultrasonic welding device.

**Figure 4:** Schematic representation of an embodiment of the fusion precision process, wherein **14** corresponds to the forward movement, **15** is the trigger, **16** is the control, **17** is the wait and **18** the diagnosis.

**Figure 5:** Schematic representation of an embodiment of the ultrasonic welding device.

**DETAILED DESCRIPTION**

The present disclosure refers to an ultrasonic welding device. Preferably, the objective of the present disclosure is to weld thermoplastic materials.

The workstation presents the possibility of controlling all the stages and parameters of the ultrasonic welding process.

In an embodiment, the device has a work volume of 355x320x470 mm, the support of the acoustic assembly has a linear stroke of 100 mm and pneumatic actuation. Its initial height regulation may vary between 120 mm and 470 mm. The lowering speed of the support can be precisely regulated with a resolution of 40 levels in a maximum range between 0 m/s and 1 m/s, through a one-way precision flow control valve. The range of speeds can be adjusted, by controlling the maximum speed, when the equipment is installed (having a specific restrictor). The pressure exerted by the pneumatic cylinder can be regulated by the operator through the control console with display, allowing a variation between 0.005 and 0.9 MPa. The work base has a leveling table so as to adjust to any existing misalignment and to enable various types of "Gabarit" to be fastened.

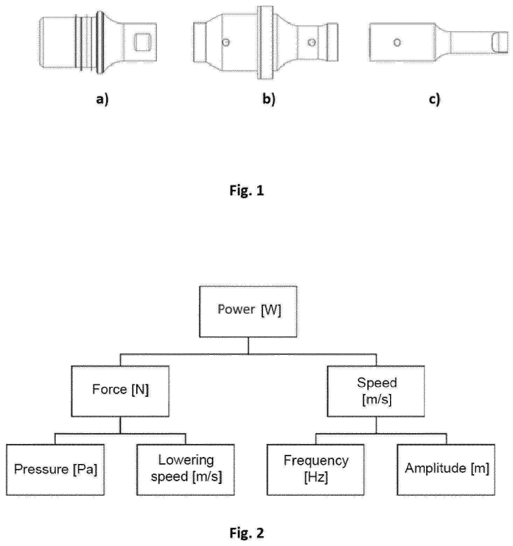

In an embodiment, **Figure 1** represents the acoustic assembly, namely the converter, booster and horn. The converter is the element responsible for transforming a sinusoidal electrical voltage into a mechanical oscillatory vibration with the same frequency, using piezoelectric ceramic disks. The amplitude of the mechanical vibration can be controlled by the variation of the electrical voltage in the ultrasonic generator. In case it is necessary to amplify the amplitude of the mechanical vibration, a booster designed in accordance with the intended application is coupled in series. The horn is the element responsible for transmitting the mechanical vibration to the workpiece to be welded and should be designed in accordance with the application, and may also amplify the vibration. The final vibration amplitude must respect the application and the material to be welded, it being necessary to initially predefine this value so as to construct the acoustic assembly accordingly.

In the embodiment of **Figure 1,** the device has a converter with a maximum amplitude of 20 $\mu$m, a booster with a two-fold amplification and a horn with a threefold amplification. Accordingly, the acoustic assembly has a vibration amplitude comprised between 12 and 120$\mu$m.

In an embodiment, the amplitude of the converter may vary from 2 to 20 $\mu$m.

In an embodiment, **Figure 2** represents the welding parameters wherein the power developed by the welding process depends on the force applied on the workpiece and on the speed at which this force is applied, and can be described by the formula:

$$P = Fv\,(W)$$

The force is controlled by the pneumatic pressure in the cylinder and by the lowering speed of the acoustic assembly. The speed is defined by the frequency and by the oscillation amplitude of the horn face. The frequency is a physical characteristic of the acoustic assembly, and cannot be controlled without replacing components. All other parameters can be regulated on this device. In order to regulate the force applied to the workpiece, a pneumatic proportional valve was introduced, which converts an electric signal into a certain and precise pressure value. In order to control the lowering speed of the acoustic assembly, the device comprises a one-way control precision flow valve arranged on the exhaust of the pneumatic cylinder, to regulate the speed of movement of the acoustic assembly in the forward situation. The amplitude is regulated by the generator of the electrical voltage where it is possible to vary the voltage between 100 and 1000V.

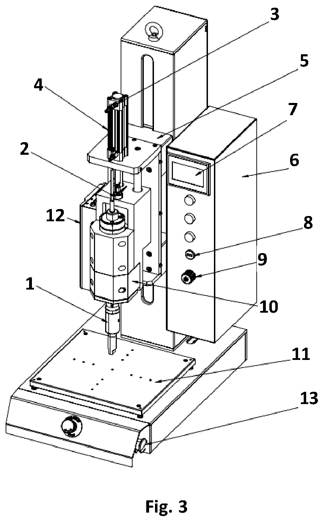

In an embodiment, **Figure 3** represents the ultrasonic welding device wherein **1** represents the acoustic assembly, **2** represents the load cell, **3** represents the pilot no-return valve, **4** represents the transmitter or position sensor, **5** represents the adjustment of the initial position of the support car of the acoustic assembly, **6** represents the electrical panel of the device, **7** represents the man-machine interface through a touch-sensitive screen, **8** represents the data output by a USB port, **9** represents a precision one-way flow control valve, **10** represents the support of the acoustic assembly for rapid exchange, **11** represents the leveling table or plate, **12** represents the electrical voltage generator, **13** represents one of the bi-manual buttons.

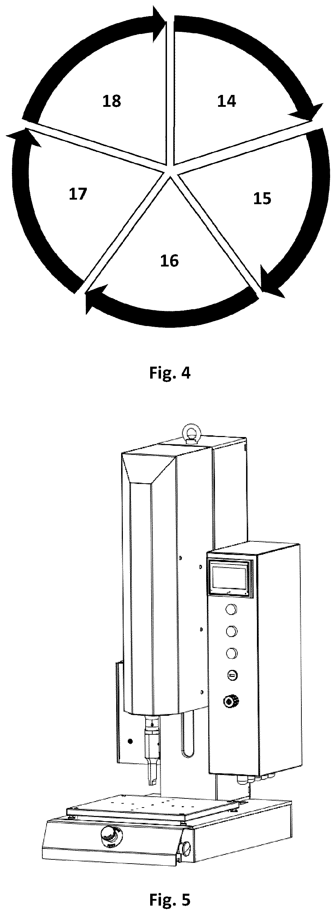

In an embodiment, **Figure 4** represents the fusion precision process, wherein **14** corresponds to the forward movement of the acoustic assembly, it being possible to control the forward speed and the pressure of the pneumatic cylinder, **15** is the trigger for triggering the ultrasounds which is commanded by the force exerted on the load cell, **16** is the control of the fusion where the time of application of the ultrasounds and the energy applied to the workpiece are measured, **17** is the wait where the pressure exerted is defined during cooling of the workpiece and the cooling down time and **18** the diagnosis where it is possible to control the displacement sustained during fusion so as to detect possible defects. This figure demonstrates that the welding cycle implemented in this device makes it possible to control the various parameters of the welding and to control it online. It is thus possible to obtain repeatability and reliability in the fusion process, as well as enabling a total control of the energy applied to the workpiece.

In an embodiment, **Figure 5** represents the ultrasonic welding device.

According to the cycle demonstrated in **Figure 4,** it is possible to develop stable and repeatable weldings, as well as to control possible defects, rejecting workpieces.

The workstation makes it possible to control the welding by time and energy, regulate the vibration amplitude between 10-100%, apply forces up to 5000 N and use acoustic assemblies with 20 kHz and 30 kHz.

When used in this document, the term "comprises" or "comprising" is meant to indicate the presence of characteristics, elements, integers, steps and components mentioned, but not to preclude the presence or the addition of one or more other characteristics, elements, integers, steps and components, or groups thereof.

The present invention is, of course, in no way restricted to the embodiments described in this document and a person with average skills in the art may foresee many possibilities of modifying the same and of substituting technical features for other equivalents, depending on the requirements of each situation, as defined in the appended claims.

The following claims define additional embodiments of the present description.

**Claims**

1. Ultrasonic welding device, comprising:

   an ultrasonic welding acoustic assembly (1) for joining workpieces by fusion;
   a pneumatic cylinder for linearly moving the acoustic assembly (1) between a lowered welding position and a raised resting position;
   a load cell (2) for detecting force applied to the workpieces by the acoustic assembly.

2. Device according to the previous claim comprising a pilot no-return valve (3) for controlling the pneumatic cylinder in order to limit the upward linear movement of the pneumatic cylinder up to an intermediate position between the lowered welding position and a raised resting position.

3. Device according to any of the previous claims comprising a position sensor (4) for detecting the position of the acoustic assembly (1) relative to the workpieces.

4. Device according to any of the previous claims comprising a controller configured for receiving a signal from the position sensor (4) in order to measure downward linear movement of the acoustic assembly after welding the workpieces to warn of a defective welding if the downward linear movement is greater than a pre-set threshold.

5. Device according to any of the previous claims comprising a movable plate (11) relative to a base of the device, for supporting the workpieces for welding, and wherein the acoustic assembly is configured for linearly moving relative to the base of the device.

6. Device according to the previous claim wherein the plate is vertically movable relative to the base of the device between a lowered position and a raised position.

7. Device according to any of the previous claims wherein the acoustic assembly (1) comprises a converter, a booster and a horn.

8. Device according to any of the previous claims wherein the acoustic assembly (1) has a vibration amplitude of 12 - 120$\mu$m.

9. Device according to any of the previous claims wherein the load cell (2) is configured for detecting a force from 200 to 5000 N, preferably from 500 to 2000 N, more preferably of 1000 N.

10. Device according to any of the previous claims comprising a precision one-way flow control valve (9) arranged on an air outlet of the pneumatic cylinder, for regulating the speed of movement of the acoustic assembly (1).

11. Device according to the previous claim wherein the precision one-way flow control valve (9) is one-way.

12. Device according to any of the previous claims wherein the pneumatic cylinder exerts a pressure of 0.005 to 0.9 MPa, preferably 0.05 to 0.6 MPa.

13. Device according to any of the previous claims wherein the acoustic assembly (1) has a frequency from 15 to 50 kHz, preferably from 20 kHz to 30 kHz.

14. Device according to any of claims 7 to 13 wherein the converter has a maximum amplitude of 20 $\mu$m, preferably from 2 to 20 $\mu$m.

15. Device according to any of claims 7 to 14 wherein the converter comprises a plurality of piezoelectric ceramics, preferably piezoelectric ceramic disks.

**Fig. 1**

**Fig. 2**

Fig. 3

**Fig. 4**

**Fig. 5**

Europäisches
Patentamt

European
Patent Office

Office européen
des brevets

# EUROPEAN SEARCH REPORT

**Application Number**

EP 24 18 2580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 152 350 A (HAYASHI YOICHI [JP] ET AL) 28 November 2000 (2000-11-28) * lines 52-56 - column 12; figure 2 * ----- | 1,3-15 | INV. B29C65/08 |

**TECHNICAL FIELDS SEARCHED (IPC)**

B29C

The present search report has been drawn up for all claims

| Place of search | Date of completion of the search | Examiner |
|---|---|---|
| Munich | 13 November 2024 | Carré, Jérôme |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**EP 4 653 180 A1**

## ANNEX TO THE EUROPEAN SEARCH REPORT
## ON EUROPEAN PATENT APPLICATION NO.

EP 24 18 2580

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2024

| Patent document cited in search report | Publication date | Patent family member(s) | Publication date |
|---|---|---|---|
| US 6152350 A | 28-11-2000 | NONE | |

EPO FORM P0459

For more details about this annex : see Official Journal of the European Patent Office, No. 12/82